Europäisches Patentamt

European Patent Office

Office européen des brevets

(11) Publication number: **0 265 173**

**A2**

(12) # EUROPEAN PATENT APPLICATION

(21) Application number: **87309108.6**

(22) Date of filing: **15.10.87**

(51) Int. Cl.⁴: **F16D 55/14**

(30) Priority: **18.10.86 GB 8625022**

(43) Date of publication of application:
**27.04.88 Bulletin 88/17**

(84) Designated Contracting States:
**DE FR GB IT**

(71) Applicant: **LUCAS INDUSTRIES public limited company**
**Great King Street**
**Birmingham, B19 2XF West Midlands(GB)**

(72) Inventor: **Price, Anthony George**
**14 Meadow Lane Croesyceiliog**
**Cwmbran Gwent NP44 2EY Wales(GB)**
Inventor: **Campbell, Roy**
**The Corner House 1 Marlbrook Lane**
**Licky Rock Bromsgrove Worcestershire(GB)**

(74) Representative: **Spall, Christopher John et al**
**BARKER, BRETTELL & DUNCAN 138 Hagley Road**
**Edgbaston Birmingham B16 9PW(GB)**

(54) **Improvements in self-energising disc brakes.**

(57) In a self-energising disc brake of the spreading type the application of the brake is initiated by the displacement in a radial direction of a wedge (21). The wedge (21) is disposed between two pressure plates (5, 6) and acts on the plates through a pair of thrust transmitting members (23, 24) each housed in a pair of complementary pockets (31, 32) of which the bases are parallel with each other and, preferably, are also inclined to provide an axial movement which coincides with that of the ramps (11) in the pressure plates with which the rolling bodies (10) cooperate.

FIG.1

# IMPROVEMENTS IN SELF-ENERGISING DISC BRAKES

This invention relates to self-energising disc brakes of the kind in which rotatable friction discs provided with linings of friction material are adapted to be brought into engagement with spaced opposed braking surfaces in a housing by pressure plates located between the friction discs and centred by stationary pilot lugs, rolling bodies are located in pairs of complementary angularly spaced recesses in the adjacent faces of the pressure plates, and the application of the brake is initiated by moving the pressure plates angularly in opposite directions, the pressure plates then moving apart by a tendency for the rolling bodies to ride up ramps defined by the edges of at least one recess of each pair and constituting camming means, so that the pressure plates move into engagement with the friction discs which are urged into engagement with the braking surfaces, the pressure plates being carried round with the friction discs until one is arrested by the engagement of a lug on the plate with a drag-taking stop abutment in the housing, and the continued angular movement of the other pressure plate providing a servo action.

Self-energising brakes of the kind set forth may be dry or they may be of the liquid cooled type, and such brakes are commonly used in tractors and like vehicles and are hereinafter called brakes of the kind set forth.

In known disc brakes of the kind set forth it is usual to apply the brake for normal service braking or parking, or in an emergency, by applying on brake-applying force to a pair of lugs on the pressure plates to urge the lugs either relatively towards, or relatively away from, each other.

In one known construction this can be achieved by the use of a pull-rod which acts on the lugs through a pair of toggle links of which the outer ends are coupled to the pull-rod and each of the inner ends is pivotally coupled to one of the lugs.

In other constructions levers, expander wedges, and cam shafts have also been successfully employed. Also such known means have required their own particular connections with the pressure plates, such as pivot pins, special machined surfaces, and locking and locating mechanisms, each with its own special interface.

In another construction disclosed in GB 986 525 the lugs are adapted to be separated by an element which is adapted to be withdrawn from the housing in a generally radial direction and balls carried by the element co-operate with radially extending recesses in the lugs which recesses converge outwardly. When the element comprises a wedge the balls may co-operate with its inclined faces to eliminate substantially all sliding friction between the wedge and the lugs.

In yet another construction disclosed in GB 686 426 a lever mounted between the pressure plates has an enlarged inner end provided in one side with a seat for a single ball received in a complementary seat in the adjacent plate, and in the opposite side with a pair of recesses complementary with similar recesses in the other pressure plate with balls housed in the recesses of each pair. The lever is angularly movable about the single ball as an axis and its engagement in the seats causes displacement of the other balls with respect to the plates and consequent relative circumferential and axial movement between the plates to initiate operation of the brake.

According to our invention in a self-energising disc brake of the kind set forth the application of the brake is initiated by the displacement in a radial direction of a wedge which is disposed between the two pressure plates and acts on the plates through a pair of thrust transmitting members which are restrained against movement in a radial direction with respect to the plates, and the wedge lies in a plane parallel to the ramps with which the rolling bodies co-operate.

Each thrust transmitting member is housed in a complementary pair of actuator pockets in the plates, and the bases of both pockets are parallel with each other and are preferably also inclined to provide an axial movement which coincides substantially with that of those ramps with which the rolling bodies co-operate.

In operation the thrust members apply a brake-applying force between opposed end faces of the pockets in different pressure plates to move the plates angularly in opposite directions accompanied by relative axial movement between the plates, and the thrust members have sliding engagements both with the edges of the wedge and with the base of the other pocket of that pair.

Our actuator is very compact which is a considerable advantage.

Preferably each pressure plate is provided with a single actuator pocket, and both thrust members share the two pockets of that pair. Thus the end faces are disposed at the outer ends of the pockets and each thrust member has a sliding engagement with the inclined face defined by the base of the pocket with the end face of which the other thrust member co-operates.

Each thrust member is at least of part-spherical outline and may be provided with a localised, flat, surface with which the adjacent edge of the wedge co-operates. The localised surface increase the effective areas of contact, thereby spreading the brake-applying load more evenly.

Two embodiments of our invention are illustrated in the accompanying drawings in which:-

Figure 1 is a plan of a brake of the self-energising type with a friction disc and most of one pressure plate omitted for clarity;

Figure 2 is a view of the pressure plates of the brake of Figure 1 and incorporating a section through the mechanical brake actuating mechanism;

Figure 3 is a section similar to Figure 2 but showing a modification with the section taken on line 3-3 of Figure 2;

Figure 4 is a plan of the mechanism shown in Figure 3 with one pressure plate removed for clarity;

Figure 5 is a side view of a thrust-transmitting member for use in the brake of Figures 3 and 4; and

Figure 6 is an end view of the thrust-transmitting member.

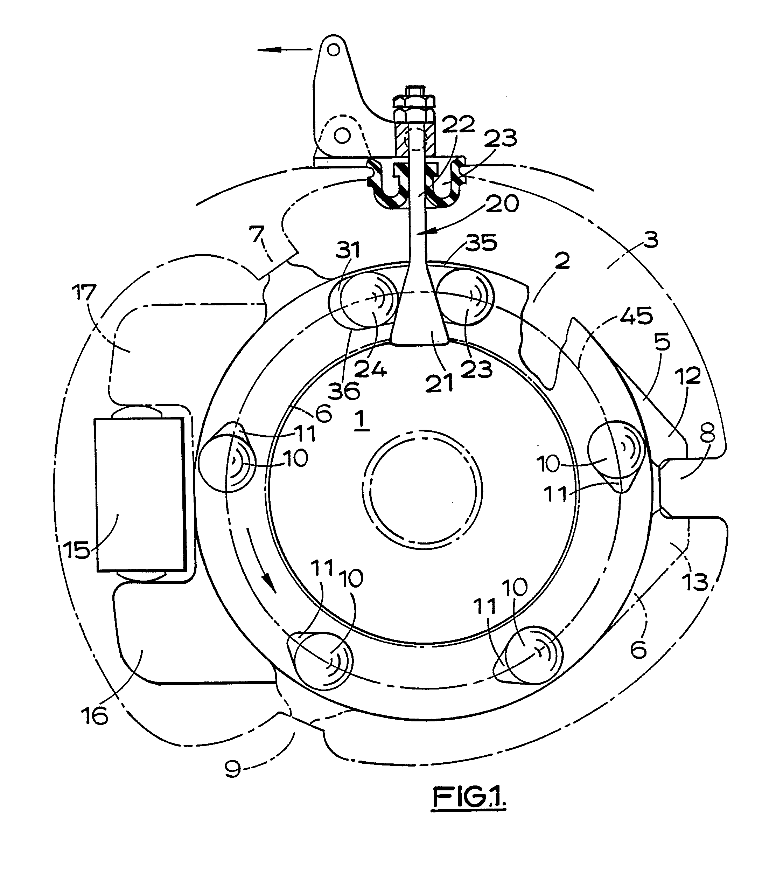

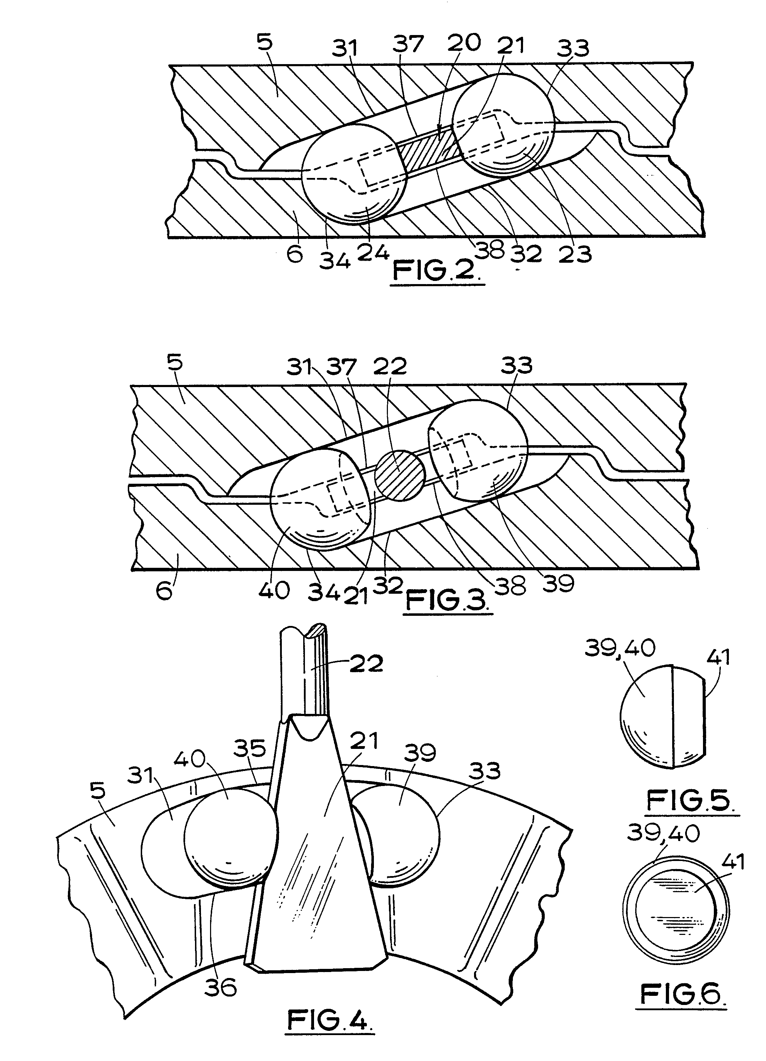

In the brake of the spreading type illustrated in Figures 1 and 2 of the accompanying drawings, axially spaced friction discs 1 provided with friction linings are adapted to be brought into engagement with spaced opposed braking surfaces 2 in a housing 3 by pressure plates 5, 6 located between the discs and centred by three angularly spaced stationary pilots 7, 8, 9. Balls 10 comprising rolling bodies are located in co-operating oppositely inclined recesses 11 in the adjacent faces of the pressure plates 5, 6 with the recesses in both plates lying on pitch circles of equal diameters.

The application of the brake is initiated by moving the pressure plates 5, 6 angularly in opposite directions. This causes the pressure plates 5, 6 to move axially relatively away from each other due to the tendency for the balls 10 to ride up ramps defined by the end faces of the recesses 11 and defining camming means. This urges the friction discs 1 into engagement with the faces 2 in the housing 3. The pressure plates 5, 6 are then carried round with the discs until one is arrested by the engagement of a lug 12, 13 on a respective plate 5, 6 with a drag-taking abutment constituted by the pilot 8.

For normal service braking the brake is applied hydraulically by an hydraulic actuator 15 which acts between lugs 16, 17 on the respective pressure plates 5, 6.

The brake is applied mechanically for parking or in an emergency by a mechanical actuating mechanism 20 which is displaced angularly by substantially 90° with respect to the hydraulic actuator.

The actuating mechanism 20 comprises a wedge 21 at the inner end of a pull-rod 22. The pull-rod 22 projects into the brake through a radial opening 23 in the housing 3, and the wedge 21 is positioned between the plates 5, 6 and between a pair of thrust transmitting members 23, 24 in the form of spherical balls which lie on the same pitch circle diameter as the balls 10 and are spaced closely from each other.

Each plate 5, 6 is provided with an actuator pocket 31, 32 comprising a recess which extends circumferentially. The base or end face of each recess 31, 32 defines a ramp surface which is parallel to the end faces of the recesses 11 in the plates 5, 6 with which the balls 10 co-operate.

The thrust transmitting members 23, 24 are housed in the pockets 31, 32 in engagement with part-spherical end faces 33, 34 at the outer ends of the pockets. The ball 23 is also in engagement with the base of the pocket 32 and the ball 24 is also in engagement with the base of the pocket 31. The members 23 and 24 are constrained against movement in a radial direction with respect to the plates 5, 6 by the co-operation with radially inner and outer arcuate end faces 35, 36 which are spaced apart by a radial dimensions slightly greater than the diameters of the members 23, 24.

The wedge 21 lies in a plane parallel to the bases of the pockets 31 and 32, and parallel to the other recesses 10 in the plates 5 and 6. Specifically the wedge is disposed between localised angled surfaces 35 and 36 in the plates, which surfaces are parallel to the bases of the pockets 31 and 32.

When the wedge 21 is withdrawn relative to the housing in a radial direction, the sliding engagement of the wedge 21 acts to separate the members 23 and 24, in turn to move the pressure plates 5, 6 angularly in opposite directions accompanied by relative movement of the plates away from each other as described above, due to the engagement of the members 23, 24 with the faces 33 and 34. During these movements the members 23 and 24 also have sliding engagements with the bases of the other pockets 32 and 31, respectively, and are restrained against radial movement in an outer direction by the co-operation with the outer arcuate end faces 35 in the plates 5, 6.

Over the relatively small helical rotation of he pressure plates 5 and 6 associated with the working life of the brake, the perpendicular distance between the localised angled surfaces 37 and 38 will remain substantially constant with the actual separation of the two plates 5, 6. Only slight variations in the attitude of the wedge 21 are permitted. This therefore improves the location of the wedge 21 and the thrust members 23, 24 which, in turn, improves durability.

The mechanical actuating mechanism has a substantially constant velocity ratio, and exhibits equal forward/reverse geometry.

In the mechanism illustrated in Figures 3-6 of the drawings the thrust transmitting members 23 and 24 are replaced by part-spherical thrust transmitting members 39 and 40 shown in detail in Figures 5 and 6. Each member 39 and 40 has a flat face 41 for sliding engagement with an adjacent flat edge of the wedge 21. The flat faces 41 spread the brake-applying load more evenly which also improves durability.

In the constructions described above the angle of the wedge 21 can be substantially equal to the effective ramp angle of the pockets 31, 32 and of the recesses 11 of the camming means.

In this way the brake factor can be maximised for any given ramp angle, with the wedge 21 suitably constrained and compacted as described above.

## Claims

1. A self-energising disc brake in which rotatable friction discs (1) provided with linings of friction material are adapted to be brought into engagement with spaced opposed braking surfaces (2) in a housing (3) by pressure plates (5, 6) located between the friction discs and centred by stationary pilot lugs (7, 8, 9), rolling bodies (10) are located in pairs of complementary angularly spaced recesses (11) in the adjacent faces of the pressure plates, and the application of the brake is initiated by moving the pressure plates angularly in opposite directions, the pressure plates then moving apart by a tendency for the rolling bodies to ride up ramps defined by the edges of at least one recess (11) of each pair and constituting camming means, so that the pressure plates move into engagement with the friction discs which are urged into engagement with the braking surfaces, the pressure plates being carried round with the friction discs until one is arrested by the engagement of a lug (12, 13) on the plate with a drag-taking stop abutment (8) in the housing, and the continued angular movement of the other pressure plate providing a servo action, characterised in that the application of the brake is initiated by the displacement in a radial direction of a wedge (21) which is disposed between the two pressure plates (5, 6) and acts on the plates through a pair of thrust transmitting members (23, 24; 39, 40) which are restrained against movement in a radial direction with respect to the plates, and the wedge lies in a plane parallel to the ramps (11) with which the rolling bodies (10) co-operate.

2. A disc brake according to claim 1, characterised in that each thrust transmitting member (23, 24; 39, 40) is housed in a pair of complementary actuator pockets (31, 32) in the plates (5, 6), and each pocket has spaced radial inner and outer arcuate end faces (36, 35), the members being adapted to co-operate with the corresponding end faces (36, 35) of the pockets whereby to restrain the members against movement with respect to the plates (5, 6) in a radial direction.

3. A disc brake according to claim 2, characterised in that the wedge (21) is adapted to be withdrawn in a radially outwards direction to apply the brake, and the members (23, 24; 39, 40) are adapted to co-operate with the outer end faces of the pockets (36, 35) whereby the members are restrained against movement with respect to the plates (5, 6) in a radially outwards direction.

4. A disc brake according to claim 2 or claim 3, characterised in that each actuator pocket (31, 32) has a base with which the thrust transmitting members (23, 24; 39, 40) co-operate and the bases of both pockets are parallel with each other.

5. A disc brake according to claim 4, characterised in that the bases of both pockets (31, 32) are both inclined with respect to the planes of the plates (5, 6) to provide an axial movement which coincides substantially with that of those ramps (11) with which the rolling bodies (10) co-operate.

6. A disc brake according to claim 5, characterised in that bases of the pockets (31, 32) are parallel to the ramps (11).

7. A disc brake according to any preceding claim characterised in that each pressure plate (5, 6) is provided with a single actuator pocket (31, 32), and both thrust members (23, 24; 39, 40) share the two pockets of that pair.

8. A disc brake according to any preceding claim, characterised in that each thrust member (31, 32) is of spherical outline.

9. A disc brake according to any of claim 1-7, characterised in that each thrust member (39, 40) is of part-spherical outline having a localised flat surface (41), and the wedge has relatively inclined flat edges which act slidably against the surfaces (41) when the wedge (21) is displaced substantially in a radial direction with respect to the housing (37).

FIG.1.

FIG.2.

FIG.3.

FIG.4.

FIG.5.

FIG.6.